# EUROPEAN PATENT APPLICATION

(11) **EP 2 198 760 A1**
(43) Date of publication of application: **23.06.2010**
(21) Application number: 09166706.3
(22) Date of filing: 29.07.2009
(51) Int. Cl.: A47J 43/046, A47J 43/07

(54) **Food processing device**

(30) Priority: 22.12.2008 TW 97223020 U
(71) Applicant: Chang Chien, Sung Shan, Kaohsiung Hsien (TW)
(72) Inventor: Chang Chien, Sung Shan, Kaohsiung Hsien (TW)
(74) Representative: Horak, Michael

(57) **Abstract**

A food processing device includes at least a base, a drive unit accommodated in the base, a cutter selectively driven by the drive unit, a container, and a cover removably set in an open top of the container. The container has a wall that forms a juice discharge duct adjacent to a bottom thereof. The duct receives therein a filtering device integrally formed with the wall of the container. The duct further receives therein a filter screen. The duct has an outer circumferential surface forming an external thread to which a valve is coupled to the duct. By arranging the filtering device at one side of the lower portion of the container, the volume of the container can maintain maximum to accommodate pulverization operation of food inside the container. Thus, the convenience of use of the food processing device is enhanced.

## Description

### (a) Technical Field of the Invention

The present invention generally relates to a food processing device, and more particularly to a food processing device having a wall that forms at a location adjacent to a bottom thereof a duct that receives therein a filtering device and a filter screen for discharging juice of food so that a major portion of the volume of a container can be preserved.

### (b) Description of the Prior Art

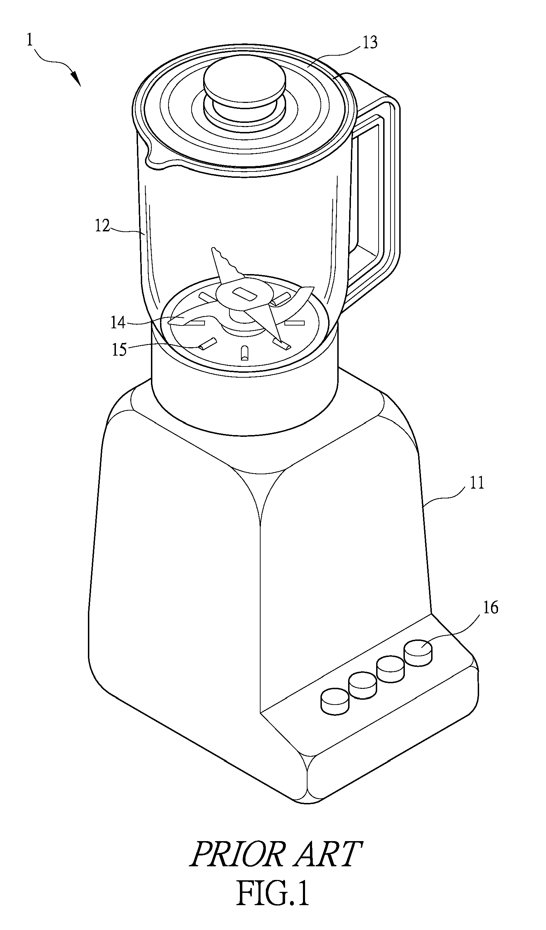

Taking excessive nutrition is a major health concern for modem people. Losing weight by taking medicines is not a feasible way for those medicines may cause side effects that harm human bodies. Thus, raw food nutrition is now prevailing for it provides sufficient nutrition, but does not make people fat. However, since people have different tastes for different types of food and some may even dislike the taste of certain solid food. This can be handled by pulverizing those solid foods by a food processing device. In this respect, the food processing device is now almost a must for kitchen utensils. The conventional food processing devices are generally divided in two types. FIG 1 shows one type of the known food processing devices, wherein the food processing device, generally designated at 1, comprises a base 11 to which a container 12 is mounted. The container 12 has an open top to which a cover 13 is removably set to close the opening. Accommodated inside the base 11 is a motor, which has a spindle coupled to and driving the rotation of a cutter 14 arranged in a lower internal space of the container 12. The container 12 forms a plurality of spaced blocks 15 on a bottom thereof. The cover 13 can be removed for depositing foods into the container 12. Control buttons 16 arranged on a surface of the base 11 are used to activate the motor for rotating the cutter 14. The blocks 15 retains and prevents the foods from rotation with the cutter 14 so as to allow the foods to be completely pulverized to form a liquid-like substance. This type of food processing device uses a cutter 14 having wide blades and is often used to make raw food diet recipe or preparing sorbet. Foods, after being pulverized and becoming a liquid form, can be directly poured out by tipping the container 12 and can then be directly drunk. However, for certain foods, the liquid formed by pulverizing the foods must be first subjected to filtration and in this situation, a user must use one hand to hold the container 12 and use another hand to hold a filter in order to pour out the liquid for filtration.

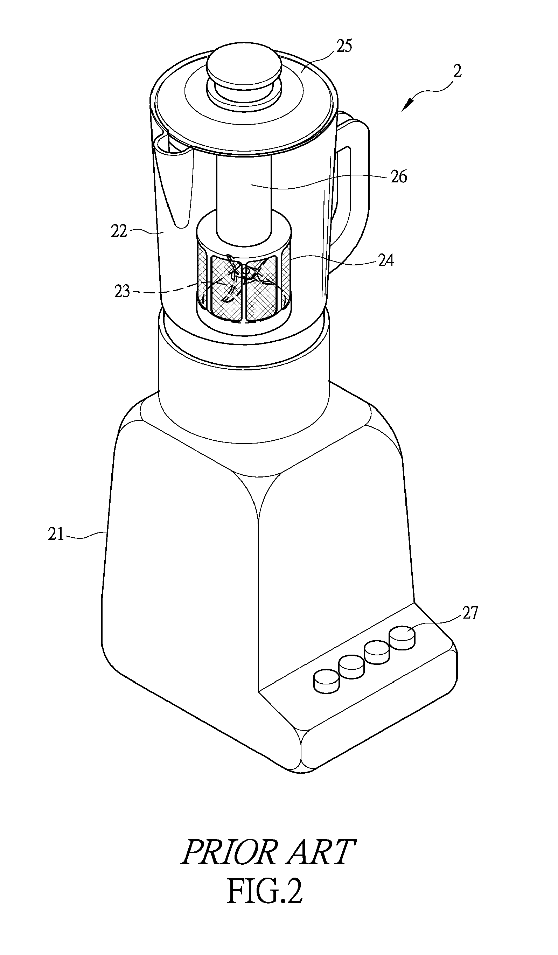

FIG 2 shows another type of food processing device, generally designated at 2. The food processing device 2 is employed to process foods, such as beans, which generate a great amount of dregs and residuals. The food processing device 2 has a base 21 to which a container 22 is mounted. Accommodated inside the base 21 is a motor, which has a spindle coupled to a cutter 23 that is rotatably arranged on the bottom of the container 22. The cutter 23 has blades that are short and is encompassed by a filter barrel 24 that has a top opening. A cover 25 is removably set to an open top of the container 22 and forms a central opening through which a feeding tube 26 is inserted. The feeding tube 26 has a lower end fit into the top opening of the filter barrel 24 to feed beans to the internal space of the filter barrel 24. Operation of the control buttons 27 set on the base 21 will activate the motor to drive rotation of the cutter 23 for pulverizing the beans into a liquid form. The filter barrel 24 functions to keep the dregs and residuals of the pulverized beans inside the barrel, but allows the liquid to flow therethrough into an internal space between the container 22 and the filter barrel 24. The container 22 may then be detached from the base 21 for being tipped to pour out the liquid.

The above discussed food processing devices are classified in accordance with whether the food liquid needs to be filtered or not. Thus, the manufacturers often produce a food processing device that includes a base 21 and two different containers 22 for selective combination so that the general consumers may select and use either one of the containers based on his or her needs. This arrangement saves one base and thus reduces the expense. However, it is quite often that different types of foods are alternately processed, making it troublesome to repeatedly change the containers 22. Further, the containers 22, after being used, must be cleaned. Further, for the container that includes the filter barrel 24, since foods, such as beans, are pulverized inside the filter barrel 24 and the pulverized dregs of beans are confined within the barrel 24, the available space of the container 22 for pulverizing food is reduced. The reduction of the available effective space makes it necessary to add water in order to maintain proper operation of the cutter 23. This is certainly not a perfect structure and improvement is needed.

To solve the above problems, the present applicant developed a food processing devices, which are respectively disclosed in Taiwan Patent Application Nos. 9121950 and 92221077, as shown in FIGS. 3 and 4 respectively, wherein a filter screen 28 and a duct 29 are provided in a bottom or beside a lower portion of the container 22 and a valve 20 is installed on the duct. These two solutions are effective in solving the previously discussed problems, but they can be further improved.

### SUMMARY OF THE INVENTION

The primary technical solution of the present invention is a food processing device, which comprises at least a base, a drive unit accommodated in the base, a cutter selectively driven by the drive unit, a container, and a cover removably set in an open top of the container, wherein the container has a wall that forms a juice discharge duct adjacent to a bottom thereof. The duct receives therein a filtering device integrally formed with the wall of the container. The duct further receives therein a filter screen. The duct has an outer circumferential surface forming an external thread to which a valve is coupled to the duct. By arranging the filtering device at one side of the lower portion of the container, the volume of the container can maintain maximum to accommodate pulverization operation of food inside the container. Thus, the convenience of use of the food processing device is enhanced.

Another technical solution of the present invention is a food processing device, which comprises at least a base, a drive unit accommodated in the base, a cutter selectively driven by the drive unit, a container, and a cover removably set in an open top of the container, wherein the container has a wall that forms a juice discharge duct adjacent to a bottom thereof The duct receives therein a filtering device integrally formed with the wall of the container. A drain channel is formed inside the container adjacent to the duct, and the drain channel functions to allow the juice of food to smoothly flow from the container into the duct to be discharged.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view showing a conventional food processing device.
FIG 2 is a perspective view showing another conventional food processing device.

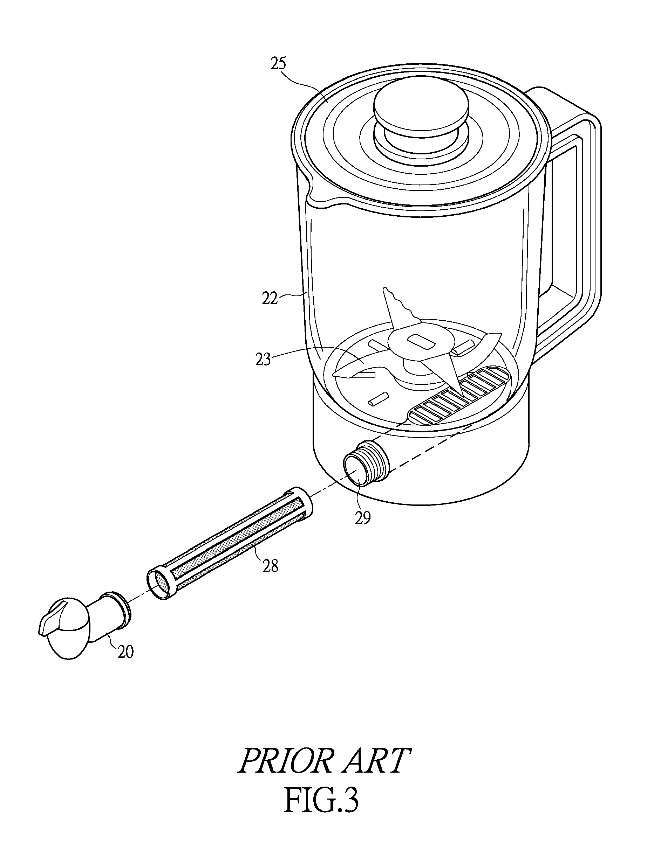

FIG 3 is an exploded view showing a food processing device disclosed in Taiwan Patent Application No. 91219150.

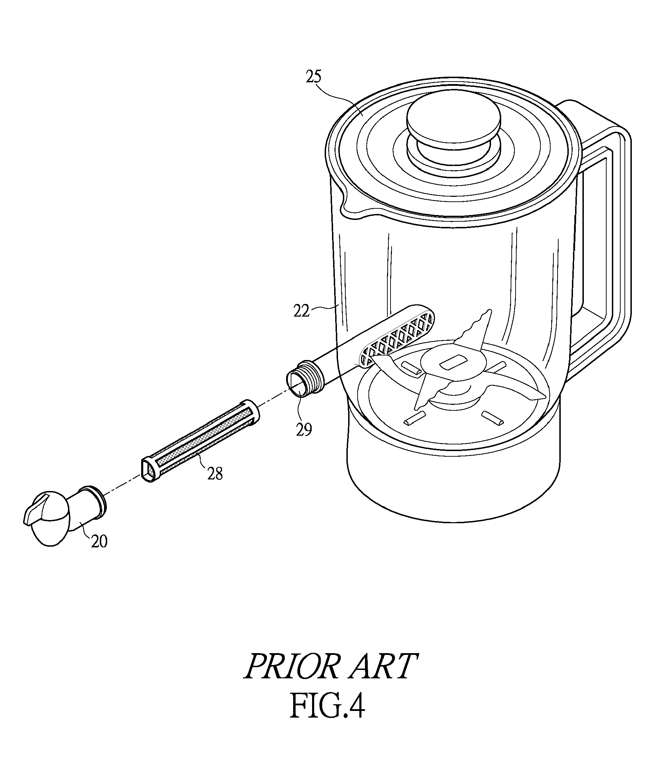

FIG 4 is an exploded view showing a food processing device disclosed in Taiwan Patent Application No. 92221077.
FIG 5 is an exploded view showing a food processing device constructed in accordance with the present invention.
FIG 6 is a side elevational view, partially broken, of the food processing device of the present invention, showing the operation of the food processing device.

### DETAILED DESCRIPTION OF THE PREFERRED EMBODIMENT

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

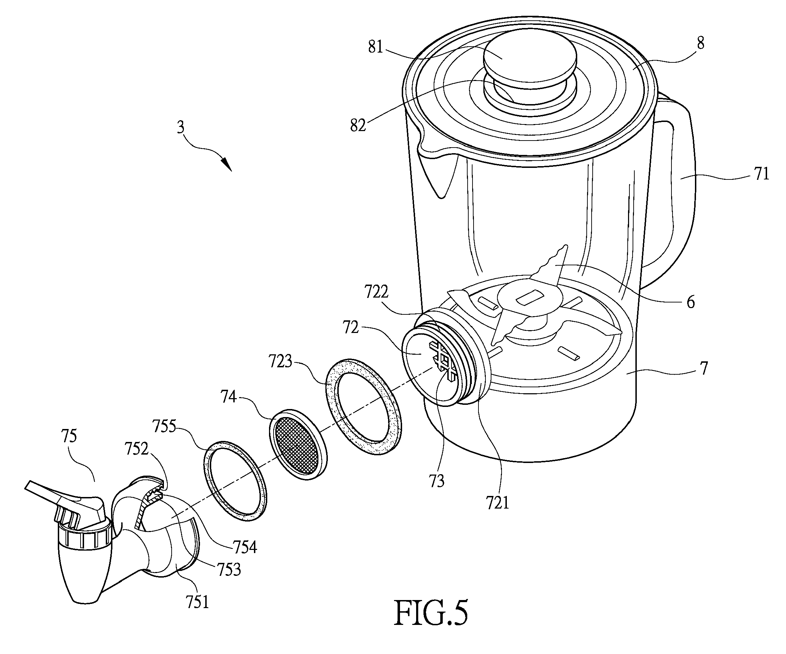

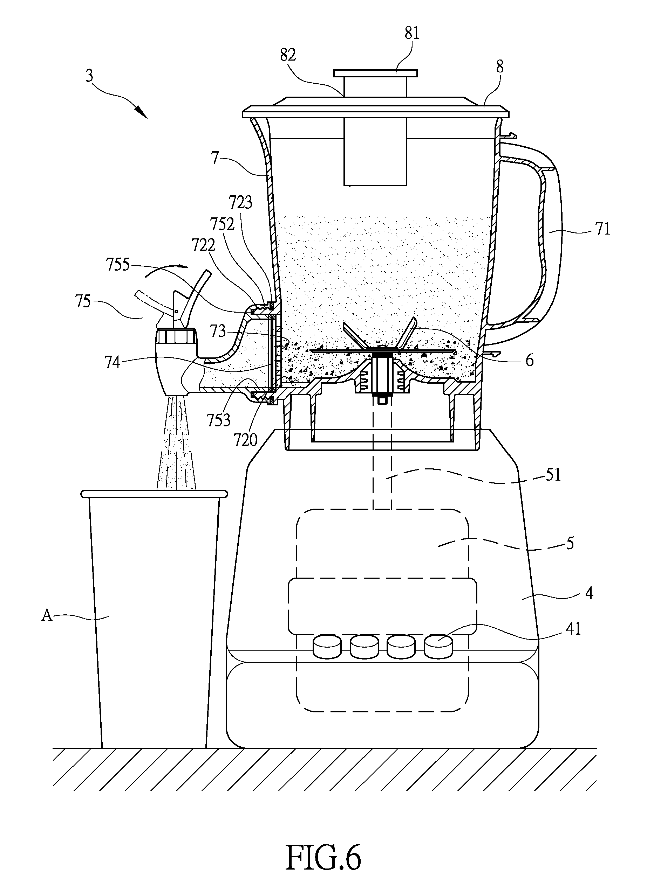

Referring to FIGS. 5 and 6, a food processing device constructed in accordance with the present invention, generally designated at 3, comprises at least a base 4, a drive unit 5 arranged inside the base 4, a cutter 6 that is driven by the drive unit 5 for rotation, a container 7, and a cover 8 removably set atop the container 7.

The base 4 is made a hollow casing defining a hollow section in which the drive unit 5 is accommodated. The base 4 has a top that supports the container 7 thereon. The base 4 is provided with a set of control buttons 41. The control buttons 41 control activation/shut-down and rotational speed of the drive unit 5. In the embodiment illustrated, the drive unit 5 comprises an electrical motor and the drive unit 5 is coupled to the cutter 6 that is located inside the container 7 through a transmission member 51. The drive unit 5 drives the cutter 6 to perform rotational motion.

The container 7 has an inside bottom on which the cutter 6 is rotatably set. The container 7 has an outer circumferential surface to which a handle 71 is mounted for being held by a user to lift the container 7. A duct 72 is formed at one side of the bottom of the container 7. The duct 72 forms an opening through the wall of the container 7 and thus communicating between outside and inside the container 7. The duct 72 forms, at the intersection thereof with the container 7, a filtering device 73, which comprises a coarse grid structure, preferably integrally formed with the wall of the container 7. The container 7 also forms a drain channel 720 adjacent to the duct 72. The filtering device 73 functions to block and filter out pulverized food fragments of large size and long fiber. A circumferential flange 721 is formed around an outer circumference of the duct 72 and an external thread 722 is also formed on the outer circumferential surface of the duct 72. A gasket ring 723 is fit to and supported by the flange 721. A filter screen 74, in the form of a flat sheet, is received in the duct 72. A valve 75 is coupled to the external thread 722 of the duct 72, so that the filtering device 73, the filter screen 74, and the valve 75 are lined up along an axis, which is preferably radial with respect to the container 7. The valve 75 forms a tubular coupling section 751 having an inner circumferential surface forming an internal thread 752 that is engageable with the external thread 722 of the duct 72. Formed inside the coupling section 751 and radially inward spaced from the internal thread 752 is an inner cylindrical wall 753, which has an outside diameter that corresponds to an inside diameter of the duct 72, so that the cylindrical wall 753 and the internal thread 752 define a ring space or channel 754 therebetween. The cylindrical wall 753 receives a gasket ring 755 to fit thereon and set in the ring space 754. The valve 75 functions to control opening/closing of the duct 72. Further, the container 7 has a top opening and the cover 8 is removably set on the open top of the container 7 to set the container 7 in a closed condition. The cover 8 comprises a cap 81 and defines a central opening 82 that extends to and communicates the interior space of the container 7.

To practice the present invention, the filter screen 74 is first fit into the duct 72 and the valve 75 is threadingly coupled to the external thread 722 of the duct 72 to such an extent that the gasket ring 755 set inside the ring space 754 abuts against an end flange of an opening of the duct 72 to prevent liquid from leaking out of the container 7. The container 7 is then positioned on the top of th4 base 4. Food to be processed is put into the container 7 and the cover 8 is set on the container 7. If desired, food or water can be added through the cap 81. By operating the control buttons 41 of the base 4, the drive unit 5 (electrical motor) accommodated inside the base 4 is activated and the rotational speed of the drive unit 5 can be further set by the control buttons 41 so that the drive unit 5 drives the cutter 6 inside the container 7 to rotate in a proper and selected speed for cutting and pulverizing the food put inside the container 7. When the food is pulverized, by operating the valve 75 coupled to the duct 72 of the container 7, the juice or tiny particles of the pulverized food that are contained in the container 7 can be discharged through the valve 75 into an external receptacle A by being first filtered by the filtering device 73 and the filter screen 74 and flowing through the duct 72 to reach the valve 75. With the drain channel 720 formed adjacent to the duct 72, the juice can flow smoothly into the duct 72 without stagnating on the bottom of the container 7.

The efficacy of the present invention is that a duct 72 is arranged at a side wall next to the bottom of the container 7; a coarse filtering device 73 is set inside the duct 72 for initial removal of food fibers of large sizes to prevent food fragment from sticking to and blocking a fine filter screen 74; and the fine filter screen 74 serves to further filter small food fragments to thereby quickly complete filtering of the food juice, which is then past through duct 72 and discharged out of the container 7 through the valve 75. Also, a major portion of the volume of the interior space of the container 7 is preserved for food to be processed. The convenience of use of the food processing device 3 can thus be enhanced.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A food processing device, comprising a base, a drive unit accommodated in the base, a cutter selectively driven by the drive unit, a container, and a cover removably set in an open top of the container, wherein the container has a wall that forms a juice discharge duct adjacent to a bottom thereof, the duct forming therein a filtering device corresponding to the wall of the container, a valve being coupled to the duct, and wherein a filter screen is arranged between the filtering device and the valve so that the filtering device, the filter screen, and the valve are lined up along a common axis.

2. The food processing device according to claim 1, wherein the duct has an outer circumference forming a circumferential flange.

3. The food processing device according to claim 1, wherein the filtering device comprises a coarse grid structure.

4. The food processing device according to claim 1, wherein the container forms therein a drain channel adjacent to the duct.

5. The food processing device according to claim 1, wherein the duct has an outer circumference over which a gasket ring is fit.

6. The food processing device according to claim 1, wherein the filter screen is in the form of a flat sheet.

7. The food processing device according to claim 1, wherein the valve forms a coupling section.

8. The food processing device according to claim 7, wherein the coupling section forms an internal thread.

9. The food processing device according to claim 7, wherein the coupling section forms therein a cylindrical wall that defines a ring space.

10. The food processing device according to claim 9, wherein the ring space receives and retains therein a gasket ring.
